# FASCICULE DE BREVET EUROPEEN

(11) **EP 1 628 866 B1**
(45) Date de publication et mention de la délivrance du brevet: **03.01.2007**
(21) Numéro de dépôt: 04742796.8
(22) Date de dépôt: 19.05.2004
(51) Int. Cl.: B60T 13/52

(54) **SERVOMOTEUR PNEUMATIQUE COMPORTANT UN DIAPHRAGME ET/OU UN JOINT SURMOULE SUR LA JUPE**
PNEUMATISCHER SERVOMOTOR MIT EINEM AUF DEN MEMBRANTELLER AUFGESPRITZTES MEMBRAN
PNEUMATIC SERVOMOTOR COMPRISING A DIAPHRAGM AND/OR A JOINT WHICH IS OVERMOULDED ONTO THE SKIRT

(30) Priorité: 22.05.2003 FR 0306376
(43) Date de publication de la demande: 01.03.2006
(73) Titulaire: ROBERT BOSCH GMBH, 70469 Stuttgart (DE)
(72) Inventeur: SACRISTAN, Fernando, E-08348 Barcelone (ES); SIMON, BACARDIT, Juan, E-08013 Barcelone (ES); BERTHOMIEU, Bruno, E-08003 Barcelona (ES)
(74) Mandataire: Hurwic, Aleksander Wiktor
(86) Numéro de dépôt international: PCT/FR2004/001254
(87) Numéro de publication internationale: WO 2004/103788

(56) Documents cités:
- DE-A- 4 121 745
- FR-A- 2 801 857
- US-A- 5 027 693

## Description

L'invention concerne un servomoteur pneumatique d'assistance au freinage. Un servomoteur du type selon le préambule de la revendication 1 est connu du document US-A-5,027,693.

L'invention concerne plus particulièrement un servomoteur pneumatique d'assistance au freinage, du type qui comporte une enveloppe axiale rigide à l'intérieur de laquelle est mobile une jupe transversale sensiblement tronconique qui est solidaire d'un piston destiné à actionner un maître cylindre associé et qui délimite dans l'enveloppe deux chambres de pression, du type dans lequel un diaphragme d'étanchéité sensiblement annulaire en matériau élastomère est interposé entre l'enveloppe et une zone périphérique extérieure de la jupe, et du type dans lequel un joint d'étanchéité sensiblement annulaire en matériau élastomère est interposé entre une zone intérieure de la jupe et le piston.

On connaît de nombreux exemples de servomoteurs de ce type.

Selon une première conception connue, on a proposé des servomoteurs dans lesquels des portées du diaphragme d'étanchéité et/ou du joint d'étanchéité sont reçues dans une gorge du piston. Cette conception présente l'inconvénient de nécessiter un montage soigneux des portées concernées dans les gorges associées, faute de quoi des défauts d'étanchéité peuvent apparaître entre la jupe et le joint ou entre la jupe et le diaphragme, mettant en communication la chambre avant et la chambre arrière du servomoteur.

Pour remédier à cet inconvénient, on a proposé selon une seconde conception un diaphragme qui est venu de matière avec le joint d'étanchéité et qui épouse une face arrière de la jupe.

Cette conception élimine théoriquement les défauts d'étanchéité qui pourraient apparaître entre la jupe et le joint ou entre la jupe et le diaphragme, mais ne prévoit pas de disposition particulière pour assurer l'adhérence du matériau élastomère avec la jupe. Si celui-ci vient à se décoller, il est susceptible de se détendre et de compromettre l'étanchéité entre le joint et la jupe ou l'étanchéité entre le diaphragme et la jupe.

Pour remédier à cet inconvénient, l'invention propose un servomoteur comportant un diaphragme d'étanchéité et/ou un joint d'étanchéité fixé des deux côtés de la jupe.

Dans ce but, l'invention propose un servomoteur du type décrit précédemment, caractérisé en ce que le diaphragme d'étanchéité et/ou le joint comporte une partie qui est surmoulée sur la jupe.

Selon d'autres caractéristiques de l'invention :
- une partie annulaire du diaphragme qui est tournée vers l'axe du servomoteur recouvre les deux côtés d'une zone périphérique extérieure tronconique de la jupe et remplit au moins un premier canal qui traverse l'épaisseur de ladite zone périphérique extérieure de la jupe pour assurer une continuité du matériau élastomère du diaphragme,
- le canal est agencé en regard d'un bossage qui est formé dans la zone périphérique extérieure tronconique de la jupe et qui est destiné à former une zone d'accumulation du matériau élastomère du diaphragme pour assurer la résistance dudit matériau à proximité du canal,
- la zone intérieure de la jupe est tubulaire et elle comporte un tronçon tubulaire avant, enserrant une portée cylindrique du piston, et un tronçon tubulaire arrière, d'un diamètre inférieur au diamètre de la portée cylindrique, qui est susceptible d'être déformé et/ou emboîté dans une gorge du piston qui est agencée en arrière de la portée cylindrique,
- le joint s'étend des deux côtés du tronçon tubulaire avant et remplit au moins un perçage qui traverse l'épaisseur dudit tronçon tubulaire avant pour assurer une continuité du matériau élastomère du joint,
- le joint comporte au moins une lèvre annulaire qui est interposée entre le côté intérieur du tronçon tubulaire avant et le piston,
- le joint s'étend suivant toute la longueur du tronçon tubulaire avant et le perçage du tronçon avant est radial,
- le tronçon avant comporte une paroi d'épaulement de jonction avec le tronçon arrière, en le perçage du tronçon avant traverse axialement ladite paroi d'épaulement, et le joint s'étend des deux côtés de la paroi d'épaulement, la lèvre annulaire étant agencée dans le prolongement du perçage,
- la jupe est réalisée par emboutissage d'un flanc en tôle et en le canal est constitué d'un perçage,
- le bord de la zone périphérique extérieure tronconique qui est situé radialement à l'extérieur du bossage comporte un repli de la tôle du flanc, pour renforcer la jupe dans sa périphérie extérieure,
- le repli s'étend au moins partiellement en regard du bossage pour emprisonner le matériau élastomère du diaphragme dans le bossage,
- la jupe est réalisée par moulage d'un matériau plastique et le canal est constitué d'une chicane traversant la zone périphérique extérieure tronconique de la jupe,
- la face arrière du bord de la zone périphérique extérieure tronconique qui est situé radialement à l'extérieur du bossage comporte au moins deux dents annulaires concentriques, qui sont destinées à assurer l'immobilisation radiale du matériau élastomère du diaphragme sur la jupe,
- le diaphragme est venu de matière avec le joint.

D'autres caractéristiques et avantages de l'invention apparaîtront à la lecture de la description détaillée qui suit pour la compréhension de laquelle on se reportera aux dessins annexés dans lesquels :
- la figure 1 est une demi-vue en coupe axiale d'un servomoteur selon un état antérieur de la technique ;
- la figure 2 est une vue de détail en coupe axiale de la zone périphérique extérieure de la jupe du servomoteur selon le détail II de la figure 1 ;
- la figure 3 est une vue de détail en coupe axiale de la zone intérieure de la jupe du servomoteur selon le détail III de la figure 1 ;
- la figure 4 est une vue de détail en coupe axiale d'un premier mode réalisation de la zone périphérique extérieure de la jupe en tôle d'un servomoteur s.elon l'invention ;
- la figure 5 est une vue de détail en coupe axiale d'un second mode de réalisation de la zone périphérique extérieure de la jupe en tôle d'un servomoteur selon l'invention;
- la figure 6 est une vue de détail en coupe axiale d'un premier mode réalisation de la zone périphérique extérieure de la jupe en matériau plastique d'un servomoteur selon l'invention ;
- la figure 7 est une vue de détail en coupe axiale d'un second mode de réalisation de la zone périphérique extérieure de la jupe en matériau plastique d'un servomoteur selon l'invention;
- la figure 8 est une vue de détail en coupe axiale d'un premier mode réalisation de la zone intérieure de la jupe en tôle d'un servomoteur selon l'invention ;
- la figure 9 est une vue de détail en coupe axiale d'un second mode réalisation de la zone intérieure de la jupe en tôle d'un servomoteur selon l'invention.

Dans la description qui va suivre, des chiffres de référence identiques désignent des pièces identiques ou ayant des fonctions similaires.

Par convention, les termes "avant", "arrière", supérieur", "inférieur" désignent respectivement des éléments ou des positions orientés respectivement vers la gauche, la droite, le haut, ou le bas des figures.

On a représenté à la figure un servofrein 10 pour un véhicule automobile, comportant un servomoteur 12 pneumatique d'assistance au freinage qui est destiné à actionner un maître-cylindre 14 de freinage.

De manière connue, le servomoteur 12 comporte une enveloppe 16 axiale rigide à l'intérieur de laquelle est mobile de manière étanche une jupe 18 transversale sensiblement tronconique qui est solidaire d'un piston 20 destiné à actionner le maître cylindre 14 associé par l'intermédiaire d'une tige 22 de poussée.

De manière connue, la jupe 18 délimite dans l'enveloppe 16 deux chambres de pression, une chambre 24 de pression avant et une chambre arrière 26 qui peuvent être soumises à des pressions différentes pour provoquer le déplacement de la jupe 18 et par conséquent l'actionnement de la tige 22 de poussée.

Une telle configuration étant connue de l'état de la technique, elle ne sera pas décrite plus en détail dans la suite de la présente description.

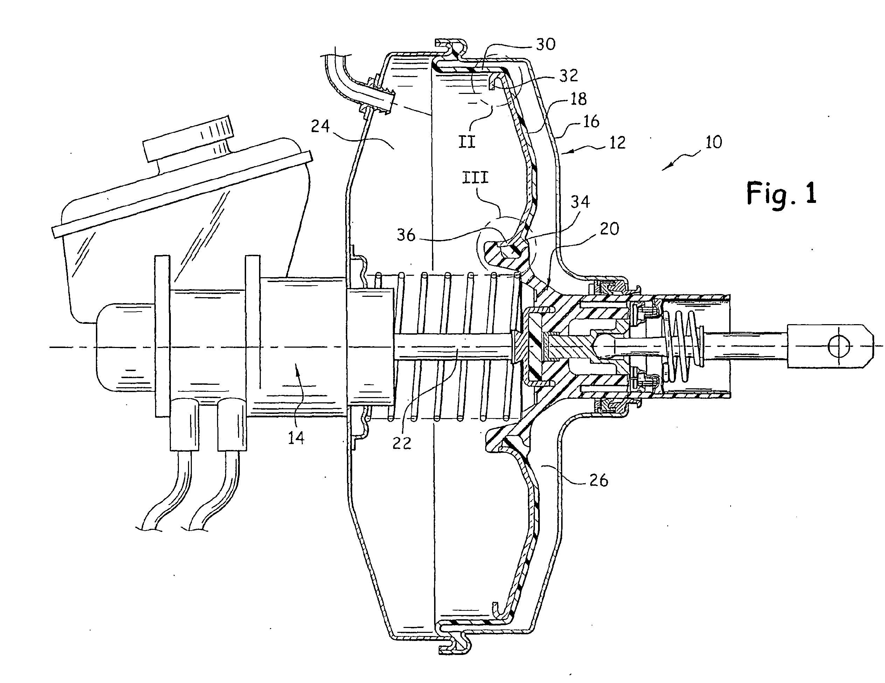

De manière connue, un diaphragme 30 d'étanchéité sensiblement annulaire en matériau élastomère est interposé entre l'enveloppe 16 et une zone périphérique extérieure 32 de la jupe 18, et un joint 34 d'étanchéité sensiblement annulaire en matériau élastomère est interposé entre une zone intérieure 36 de la jupe 18 et le piston 20. Selon les configurations connues, le diaphragme 30 et le joint 34 peuvent être venus de matière l'un avec l'autre, comme il a été représenté sur la figure 1 sur laquelle le diaphragme 30 et le joint 34 sont continus et s'étendent sur toute la face arrière 31 de la jupe 18, mais cette disposition n'est pas limitative des configurations connues, et des diaphragmes 30 et joints 34 indépendants l'un de l'autre sont aussi connus de l'état de la technique.

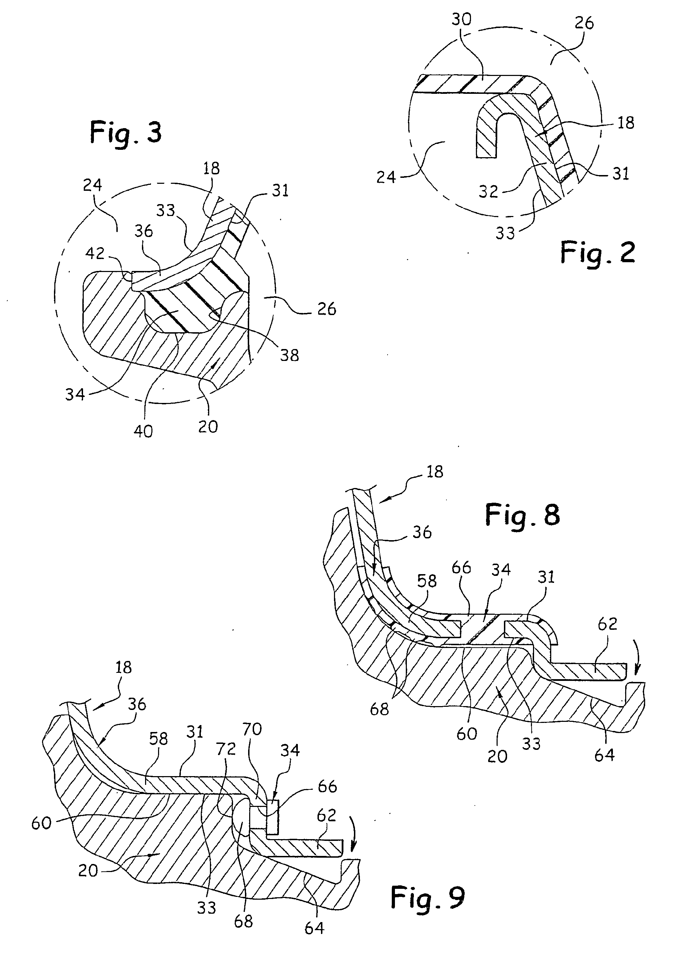

Le diaphragme 30 a été représenté sur la figure 2 selon le détail II de la figure 1 et le joint 34 a été représenté sur la figure 3 selon le détail III de la figure 1.

Comme on peut le voir sur la figure 2, le diaphragme 30 est généralement simplement fixé sur la face arrière 31 de la jupe 18, par exemple par collage ou par vulcanisation lors de la fabrication du diaphragme 30. Le diaphragme 30 ne s'étendant pas sur la face avant 33, l'air contenu dans la chambre arrière 26 peut fuir vers la chambre avant 24 si le diaphragme 30 vient à se désolidariser de la jupe 18.

D'une manière analogue, comme l'illustre la figure 3, le joint 34 est généralement immobilisé entre la face arrière 31 de la jupe 18 et une face avant 38 d'une gorge 40 du piston 20, notamment par emboîtement du joint 34. Le joint 34 ne s'étendant pas sur la face avant 33, l'air contenu dans la chambre arrière 26 peut, si le joint 34 vient à se désolidariser de la jupe 18, contourner le joint 34 et fuir à travers la gorge 40 et l'extrémité 42 de la jupe 18 vers la chambre avant.

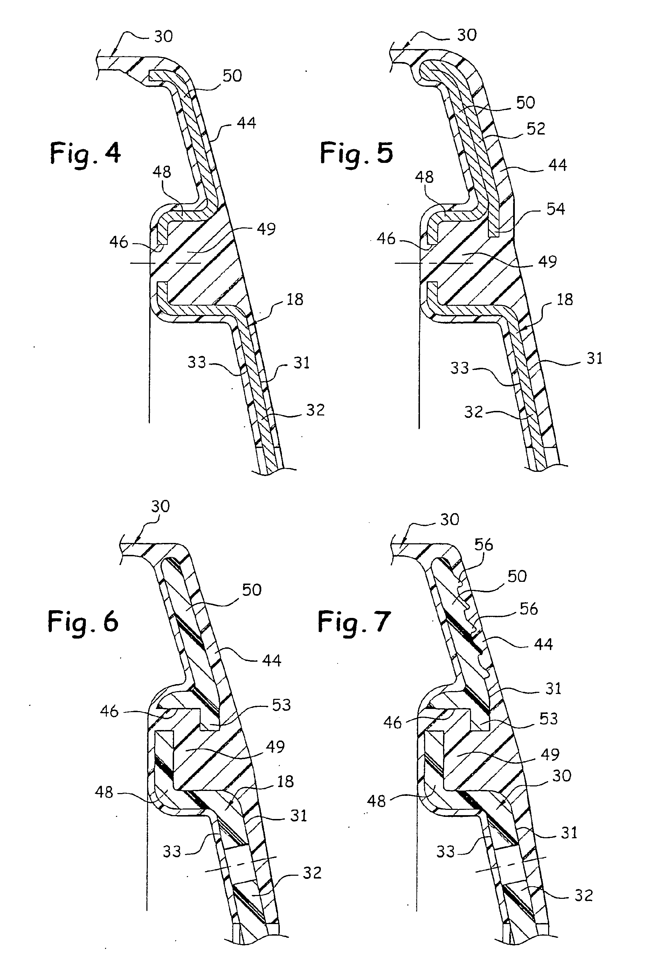

Pour remédier à ces inconvénients, comme l'illustrent les figures 4 et suivantes l'invention propose un servomoteur 12 du type décrit précédemment, caractérisé en ce que le diaphragme 30 d'étanchéité et/ou le joint 34 comporte une partie qui est surmoulée sur la jupe 18.

A cet effet, comme l'illustrent les figures 4 à 7, une partie annulaire 44 du diaphragme qui est tournée vers l'axe du servomoteur 12 recouvre les deux côtés correspondants aux faces 31 et 33 de la zone périphérique extérieure 32 tronconique de la jupe 18, et remplit au moins un premier canal 46 qui traverse l'épaisseur de ladite zone 32 périphérique extérieure de la jupe 18 pour assurer une continuité du matériau élastomère du diaphragme 30. Le remplissage du canal 46 est donc effectué lors de la polymérisation du matériau élastomère du diaphragme 30.

Plus particulièrement, le canal 46 est agencé en regard d'un bossage 48 qui est formé dans la zone périphérique extérieure 32 tronconique de la jupe 18. Ce bossage 48 est destiné à former une zone 49 d'accumulation du matériau élastomère du diaphragme 30 pour assurer la résistance dudit matériau à proximité du canal 46. Cette configuration permet notamment d'éviter le cisaillement du matériau du diaphragme 30 au travers du canal 46.

Comme l'illustrent les figures 4 et 5, la jupe 18 peut être réalisée par emboutissage d'un flanc en tôle. Dans cette configuration, le canal 46 est constitué d'un perçage et le bossage 48 est réalisé lors de l'opération d'emboutissage du flanc dont est issue le jupe 18.

Selon un premier mode réalisation de la jupe en tôle qui a été représenté à la figure 4, la jupe 18 est emboutie suivant une épaisseur unique.

Selon un second mode de réalisation de la jupe en tôle qui a été représenté à la figure 5, la jupe 18 peut être emboutie puis repliée pour présenter localement une épaisseur double.

Ainsi, le bord 50 de la zone 32 périphérique extérieure tronconique qui est situé radialement à l'extérieur du bossage 48 comporte un repli 52 de la tôle du flanc, pour renforcer la jupe 18 dans sa périphérie extérieure.

Avantageusement, une extrémité 54 du repli 52 s'étend au moins partiellement en regard du bossage 48 pour emprisonner le matériau élastomère du diaphragme 30 dans le bossage 48.

Comme l'illustrent les figures 6 et 7, la jupe 18 peut être réalisée par moulage d'un matériau plastique. Dans ce cas, le canal 46 est constitué d'une chicane traversant la zone 32 périphérique extérieure tronconique de la jupe 18. La jupe comporte un bossage 48 qui, d'une manière analogue à celui décrit précédemment, est destiné à former une zone 49 d'accumulation du matériau élastomère du diaphragme 30 pour assurer la résistance dudit matériau à proximité du canal 46. Le bossage 48 est avantageusement obtenu lors du moulage du matériau plastique de la jupe 18.

Avantageusement, une patte 53, analogue à l'extrémité 54 du repli 52 précédemment décrite en référence à la figure 5, s'étend au moins partiellement en regard du bossage 48 pour emprisonner le matériau élastomère du diaphragme 30 dans le bossage 48.

Selon un premier mode de réalisation de la jupe en matériau plastique qui a été représenté à la figure 6, le bord 50 de la zone 32 périphérique extérieure tronconique est lisse.

Selon un second mode de réalisation de la jupe en matériau plastique qui a été représenté à la figure 7, la face arrière 31 du bord 50 de la zone périphérique 32 extérieure tronconique qui est situé radialement à l'extérieur du bossage 48 comporte au moins deux dents 56 annulaires concentriques, qui sont destinées à assurer l'immobilisation radiale du matériau élastomère du diaphragme 30 sur la jupe 18. Ces dents permettent de favoriser l'interpénétration du matériau élastomère du diaphragme 30 et du matériau plastique de la jupe 18.

D'une manière analogue, les figures 8 et 9 illustrent des premier et second modes de réalisation du joint 34 associé à une jupe 18. Sur ces figures, la jupe 18 qui a été représentée est une jupe 18 obtenue à partir de l'emboutissage d'un flan en tôle, mais il sera compris que la jupe 18 pourrait, similairement à ce qui a été décrit précédemment, être réalisée par moulage d'un matériau plastique.

Comme l'illustrent les figures 8 et 9, la zone 36 intérieure de la jupe 18 comporte un tronçon 58 tubulaire avant, enserrant une portée 60 cylindrique du piston 20, et un tronçon 62 tubulaire arrière, d'un diamètre inférieur au diamètre de la portée cylindrique 60, qui est susceptible d'être déformé et/ou emboîté dans une gorge 64 du piston qui est agencée en arrière de la portée 60 cylindrique. En particulier, lorsque la jupe 18 est réalisée en tôle, le tronçon 62 est prévu pour se déformer suivant les flèches des figures 8 et 9 de manière à atteindre le fond de la gorge 64, tandis que lorsque la jupe 18 est réalisée en matériau plastique, le tronçon 62 épouse la forme de la gorge 64 et est prévu pour se déformer et s'emboîter dans ladite gorge 64.

Quel que soit le mode de réalisation envisagé, le joint 34 s'étend des deux côtés 31 , 33 du tronçon 58 tubulaire avant, et il remplit au moins un perçage 66 qui traverse l'épaisseur dudit tronçon 58 tubulaire avant pour assurer une continuité du matériau élastomère du joint 34.

Par ailleurs, le joint 34 comporte au moins une lèvre annulaire 68 qui est interposée entre le côté intérieur correspondant à la face 33 du tronçon 58 tubulaire avant et le piston 20.

Dans le premier mode de réalisation qui est représenté à la figure 8, le joint 34 s'étend suivant toute la longueur du tronçon tubulaire avant 58 et le perçage 66 du tronçon avant 58 est radial.

Dans cette configuration, le joint 34 comporte de préférence une pluralité de lèvres 68 agencées au contact de la portée 60 du piston 20.

Dans un second mode réalisation qui est représenté à la figure 9, le tronçon avant 58 comporte une paroi 70 d'épaulement de jonction avec le tronçon arrière 62. Le perçage 66 du tronçon avant 58 traverse axialement ladite paroi 70 d'épaulement et le joint 34 s'étend des deux côtés 31, 33 de la paroi 70 d'épaulement, la lèvre 68 annulaire étant agencée dans le prolongement du perçage 66 au contact d'une paroi 72 d'extrémité avant 72 de la gorge 64 du piston 20.

Enfin, dans le mode de réalisation préféré de l'invention, le diaphragme 30 est venu de matière avec le joint 34 et il recouvre toute les faces arrière 31 et avant 33 de la jupe 18. Il sera compris que cette disposition n'est pas limitative de l'invention et que le diaphragme 30 et le joint 34 pourraient être indépendants.

L'invention permet donc avantageusement d'améliorer l'étanchéité et de limiter les risques de fuites entre la jupe 18 et le diaphragme 30 et/ou le joint 34 d'un servomoteur 12.

## Revendications

1. Servomoteur (12) pneumatique d'assistance au freinage, du type qui comporte une enveloppe (16) axiale rigide à l'intérieur de laquelle est mobile une jupe (18) transversale sensiblement tronconique qui est solidaire d'un piston (20) destiné à actionner un maître-cylindre (14) associé et qui délimite dans l'enveloppe deux chambres (24, 26)de pression, du type dans lequel un diaphragme (30) d'étanchéité sensiblement annulaire en matériau élastomère est interposé entre l'enveloppe (16) et une zone (32) périphérique extérieure de la jupe (18), et du type dans lequel un joint (34) d'étanchéité sensiblement annulaire en matériau élastomère est interposé entre une zone intérieure (36) de la jupe (18) et le piston (20),
**caractérisé en ce que** le diaphragme (30) d'étanchéité et/ou le joint (34) comporte une partie qui est surmoulée sur la jupe (18), **en ce qu'**une partie (44) annulaire du diaphragme qui est tournée vers l'axe du servomoteur (12) recouvre les deux côtés (31, 33) d'une zone (32) périphérique extérieure tronconique de la jupe (18) et remplit au moins un premier canal (46) qui traverse l'épaisseur de ladite zone (32) périphérique extérieure de la jupe (18) pour assurer une continuité du matériau élastomère du diaphragme (30), et **en ce que** le canal (46) est agencé en regard d'un bossage (48) qui est formé dans la zone (32) périphérique extérieure tronconique de la jupe (18) et qui est destiné à former une zone (49) d'accumulation du matériau élastomère du diaphragme (30) pour assurer la résistance dudit matériau à proximité du canal (46).

2. Servomoteur (12) selon la revendication 1, **caractérisé en ce que** la zone (36) intérieure de la jupe (18) est tubulaire et **en ce qu'**elle comporte un tronçon (58) tubulaire avant, enserrant une portée (60) cylindrique du piston (20), et un tronçon (62) tubulaire arrière, d'un diamètre inférieur au diamètre de la portée (60) cylindrique, qui est susceptible d'être déformé et/ou emboîté dans une gorge (64) du piston (20) qui est agencée en arrière de la portée (60) cylindrique.

3. Servomoteur (12) selon la revendication précédente, **caractérisé en ce que** le joint (34) s'étend des deux côtés (31, 33) du tronçon (58) tubulaire avant et remplit au moins un perçage (66) qui traverse l'épaisseur dudit tronçon (58) tubulaire avant pour assurer une continuité du matériau élastomère du joint (34).

4. Servomoteur (12) selon la revendication précédente, **caractérisé en ce que** le joint (34) comporte au moins une lèvre annulaire (68) qui est interposée entre le côté intérieur (33) du tronçon (58) tubulaire avant et le piston (20).

5. Servomoteur (12) selon l'une des revendications 3 ou 4, **caractérisé en ce que** le joint (34) s'étend suivant toute la longueur du tronçon (58) tubulaire avant et **en ce que** le perçage (66) du tronçon avant est radial.

6. Servomoteur (12) selon l'une des revendications 3 ou 4, **caractérisé en ce que** le tronçon avant (58) comporte une paroi (70) d'épaulement de jonction avec le tronçon (62) arrière, **en ce que** le perçage (66) du tronçon avant traverse axialement ladite paroi (70) d'épaulement, et **en ce que** le joint (34) s'étend des deux côtés (31, 33) de la paroi (70) d'épaulement, la lèvre (68) annulaire étant agencée dans le prolongement du perçage (66).

7. Servomoteur (12) selon l'une quelconque des revendications précédentes, **caractérisé en ce que** la jupe (18) est réalisée par emboutissage d'un flanc en tôle et **en ce que** le canal (46) est constitué d'un perçage.

8. Servomoteur (12) selon la revendication 1 prise en combinaison avec la revendication 7, **caractérisé en ce que** le bord (50) de la zone (32) périphérique extérieure tronconique qui est situé radialement à l'extérieur du bossage (48) comporte un repli (52) de la tôle du flanc, pour renforcer la jupe (18) dans sa périphérie extérieure.

9. Servomoteur (12) selon la revendication précédente, **caractérisé en ce que** le repli (52) s'étend au moins partiellement en regard du bossage (48) pour emprisonner le matériau élastomère du diaphragme (30) dans le bossage (48).

10. Servomoteur (12) selon l'une quelconque des revendications 1 à 6, **caractérisé en ce que** la jupe (18) est réalisée par moulage d'un matériau plastique et **en ce que** le canal (46) est constitué d'une chicane traversant la zone (32) périphérique extérieure tronconique de la jupe (18).

11. Servomoteur (12) selon la revendication précédente prise en combinaison avec la revendication 1, **caractérisé en ce que** la face arrière (31) du bord (50) de la zone (32)périphérique extérieure tronconique qui est situé radialement à l'extérieur du bossage (48) comporte au moins deux dents (56) annulaires concentriques, qui sont destinées à assurer l'immobilisation radiale du matériau élastomère du diaphragme (30) sur la jupe (18).

12. Servomoteur (12) selon l'une quelconque des revendications précédentes, **caractérisé en ce que** le diaphragme (30) est venu de matière avec le joint (34).

## Claims

1. Pneumatic servomotor (12) for an assisted braking, of the type comprising a rigid axial casing (16), in which a substantially truncated-cone shaped transverse skirt (18) is movable and integral with a piston (20) for the actuation of an associated master cylinder (14), said skirt defining two pressure chambers (24, 26) inside the casing ; of the type in which a substantially annular sealing diaphragm (30) made of an elastomeric material is interposed between the casing (16) and an outer peripheral area (32) of the skirt (18) ; and of the type in which a substantially annular seal (34) made of an elastomeric material is interposed between an inner area (36) of the skirt (18) and the piston (20),
**characterised in that** the sealing diaphragm (30) and/or the seal (34) comprise(s) a portion, which is moulded over the skirt (18), **in that** an annular portion (44) of the diaphragm, which faces the axis of the servomotor (12), covers both sides (31, 33) of an outer peripheral truncated-cone shaped area (32) of the skirt (18), and fills at least a first through-thickness channel (46) provided in said outer peripheral area (32) of the skirt (18), so as to ensure a continuity of the elastomeric material of the diaphragm (30), and **in that** the channel (46) is situated facing a projection (48)which is formed in the outer peripheral truncated-cone shaped area (32) of the skirt (18), and which is intended to constitute an accumulation area (49) for the elastomeric material of the diaphragm (30), for a more reliable strength of said elastomeric material close to the channel (46).

2. Servomotor (12) according to claim 1, **characterised in that** the inner area (36) of the skirt (18) is tubular, and **in that** it comprises a front tubular section (58) encompassing a cylindrical bearing face (60) of the piston (20), and a rear tubular section (62) having a smaller diameter than that of the cylindrical bearing face (60), and capable of being deformed and/or of being fitted into a groove (64) provided in the piston (20), rearwards of the cylindrical bearing face (60).

3. Servomotor (12) according to the preceding claim, **characterised in that** the seal (34) lies on both sides (31, 33) of the front tubular section (58), and fills at least a through-thickness hole (66) provided in said front tubular section (58), so as to ensure a continuity of the elastomeric material of the seal (34).

4. Servomotor (12) according to the preceding claim, **characterised in that** the seal (34) comprises at least one annular lip (68), which is interposed between the inner side (33) of the front tubular section (58) and the piston (20).

5. Servomotor (12) according to claim 3 or 4, **characterised in that** the seal (34) extends over the full length of the front tubular section (58), and **in that** the hole (66), provided in the front section, is a radial one.

6. Servomotor (12) according to claim 3 or 4, **characterised in that** the front section (58) comprises a shoulder-forming wall (70), connecting it to the rear section (62), **in that** the hole (66) provided in the front section traverses said shoulder-forming wall (70) axially, and **in that** the seal (34) extends on both sides (31, 33) of the shoulder-forming wall (70), whereas the annular lip (68) is disposed in line with the hole (66).

7. Servomotor (12) according to any one of the preceding claims, **characterised in that** the skirt (18) is manufactured using a stamping process, carried out on a sheet-metal blank, and **in that** the channel (46) consists of a bored hole.

8. Servomotor (12) according to claim 1 when taken together with claim 7, **characterised in that** the edge (50) of the outer peripheral truncated-cone shaped area (32), which is situated radially outwards of the projection (48), comprises a fold (52) of the blank sheet, so as to strengthen the skirt (18) at its outer periphery.

9. Servomotor (12) according to the preceding claim, **characterised in that** the fold (52) extends at least in part opposite the projection (48), in order to confine the elastomeric material of the diaphragm (30) in the projection (48).

10. Servomotor (12) according to any one of claims 1 to 6, **characterised in that** the skirt (18) is moulded from a plastic material, and **in that** the channel (46) consists of a baffle extending through the outer peripheral truncated-cone shaped area (32) of the skirt (18).

11. Servomotor (12) according to the preceding claim when taken together with claim 1, **characterised in that** the rear face (31) of the edge (50) of the outer peripheral truncated-cone shaped area (32), which is situated radially outwards of the projection (48), comprises at least two concentric annular teeth (56), so as to fix the elastomeric material of the diaphragm (30) radially in position on the skirt (18).

12. Servomotor (12) according to any one of the preceding claims, **characterised in that** the diaphragm (30) is made in one piece with the seal (34).

## Patentansprüche

1. Pneumatischer Servomotor (12) zur Bremsunterstützung, vom Typ, der ein axiales, starres Gehäuse (16) aufweist, in dem eine quer verlaufende, im Wesentlichen kegelstumpfartige Schürze (18) beweglich ist, die fest mit einem Kolben (20) verbunden ist, der einen zugeordneten Hauptzylinder (14) betätigen soll, und die im Gehäuse zwei Druckkammern (24, 26) begrenzt, vom Typ, bei dem eine im Wesentlichen ringförmige Dichtungsmembran (30) aus Elastomermaterial zwischen dem Gehäuse (16) und einem umlaufenden Außenbereich (32) der Schürze (18) angeordnet ist, und vom Typ, bei dem eine im Wesentlichen ringförmige Dichtung (34) aus Elastomermaterial zwischen einem Innenbereich (36) der Schürze (18) und dem Kolben (20) angeordnet ist,
**dadurch gekennzeichnet, dass** die Dichtungsmembran (30) und/oder die Dichtung (34) einen Teil aufweist, der auf die Schürze (18) aufgeformt ist, dass ein ringförmiger, zur Achse des Servomotors (12) gerichteter Teil (44) der Membran die beiden Seiten (31, 32) eines umlaufenden, kegelstumpfartigen Außenbereichs (32) der Schürze (18) bedeckt und mindestens einen ersten Kanal (46) füllt, der durch die Dicke des umlaufenden Außenbereichs (32) der Schürze (18) hindurch verläuft, um eine Kontinuität des Elastomermaterials der Membran (30) zu gewährleisten, und dass der Kanal (46) gegenüber einer Erhebung (48) angeordnet ist, welche im umlaufenden, kegelstumpfartigen Außenbereich (32) der Schürze (18) ausgebildet ist und einen Bereich (49) für die Anhäufung des Elastomermaterials der Membran (30) bilden soll, um die Widerstandsfähigkeit des Materials nahe dem Kanal (46) zu gewährleisten.

2. Servomotor (12) nach Anspruch 1, **dadurch gekennzeichnet, dass** der Innenbereich (36) der Schürze (18) röhrenförmig ist und einen vorderen röhrenförmigen Abschnitt (58), der eine zylindrische Auflagefläche (60) des Kolbens (20) umklammert, und einen hinteren röhrenförmigen Abschnitt (62) aufweist, der einen kleineren Durchmesser besitzt als die zylindrische Auflagefläche (60) und verformt und/oder in eine Nut (64) des Kolbens (20) eingesetzt werden kann, die hinter der zylindrischen Auflagefläche (60) ausgebildet ist.

3. Servomotor (12) nach dem vorhergehenden Anspruch, **dadurch gekennzeichnet, dass** sich die Dichtung (34) auf der einen und auf der anderen Seite (31, 33) des vorderen röhrenförmigen Abschnitts (58) erstreckt und mindestens eine Bohrung (66) füllt, die durch die Dicke des vorderen röhrenförmigen Abschnitts (58) hindurch verläuft, um eine Kontinuität des Elastomermaterials der Dichtung (34) zu gewährleisten.

4. Servomotor (12) nach dem vorhergehenden Anspruch, **dadurch gekennzeichnet, dass** die Dichtung (34) mindestens eine ringförmige Lippe (68) aufweist, die zwischen der Innenseite (33) des vorderen röhrenförmigen Abschnitts (58) und dem Kolben (20) angeordnet ist.

5. Servomotor (12) nach Anspruch 3 oder 4, **dadurch gekennzeichnet, dass** sich die Dichtung (34) über die gesamte Länge des vorderen röhrenförmigen Abschnitts (58) erstreckt und dass die Bohrung (66) des vorderen Abschnitts radial ist.

6. Servomotor (12) nach Anspruch 3 oder 4, **dadurch gekennzeichnet, dass** der vordere Abschnitt (58) eine Absatzwand (70) für den Anschluss an den hinteren Abschnitt (62) aufweist, dass die Bohrung (66) des vorderen Abschnitts die Absatzwand (70) axial durchquert und dass sich die Dichtung (34) auf der einen und auf der anderen Seite (31, 33) der Absatzwand (70) erstreckt, wobei die ringförmige Lippe (68) in der Verlängerung der Bohrung (66) angeordnet ist.

7. Servomotor (12) nach einem der vorhergehenden Ansprüche, **dadurch gekennzeichnet, dass** die Schürze (18) durch Tiefziehen einer Blechflanke hergestellt und der Kanal (46) durch eine Bohrung gebildet ist.

8. Servomotor (12) nach Anspruch 1 in Kombination mit Anspruch 7, **dadurch gekennzeichnet, dass** der Rand (50) des umlaufenden, kegelstumpfartigen Außenbereichs (32), der sich radial außerhalb der Erhebung (48) befindet, eine Falte (52) der Blechflanke aufweist, um die Schürze (18) an ihrem Außenumfang zu verstärken.

9. Servomotor (12) nach dem vorhergehenden Anspruch, **dadurch gekennzeichnet, dass** sich die Falte (52) zumindest teilweise gegenüber der Erhebung (48) erstreckt, um das Elastomermaterial der Membran (30) in der Erhebung (48) einzuschließen.

10. Servomotor (12) nach einem der Ansprüche 1 bis 6, **dadurch gekennzeichnet, dass** die Schürze (18) durch Formen eines Kunststoffs hergestellt und der Kanal (46) durch ein Lenkblech gebildet ist, das den umlaufenden, kegelstumpfartigen Außenbereich (32) der Schürze (18) durchquert.

11. Servomotor (12) nach dem vorhergehenden Anspruch in Kombination mit Anspruch 1, **dadurch gekennzeichnet, dass** die hintere Fläche (31) des Randes (50) des umlaufenden, kegelstumpfartigen Außenbereichs (32), die sich radial außerhalb der Erhebung (48) befindet, mindestens zwei ringförmige, konzentrische Zähne (56) aufweist, die die radiale Blockierung des Elastomermaterials der Membran (30) an der Schürze (18) gewährleisten sollen.

12. Servomotor (12) nach einem der vorhergehenden Ansprüche, **dadurch gekennzeichnet, dass** die Membran (30) mit der Dichtung (34) einstückig ausgebildet ist.
